# EUROPEAN PATENT SPECIFICATION

(11) **EP 1 905 647 B1**
(45) Date of publication and mention of the grant of the patent: **03.12.2008**
(21) Application number: 06020280.1
(22) Date of filing: 27.09.2006
(51) Int. Cl.: B60R 11/02

(54) **Locking mechanism for locking a removable data carrier**
Verriegelungsmechanismus zum Verriegeln eines entnehmbaren Datenträgers
Mécanisme de verrouillage pour verrouiller un support de données amovible

(43) Date of publication of application: 02.04.2008
(73) Proprietor: Harman Becker Automotive Systems GmbH, 76307 Karlsbad (DE)
(72) Inventor: Klarner, Harald, 70794 Filderstadt (DE)
(74) Representative: Bertsch, Florian Oliver

(56) References cited:
- EP-A- 1 422 108
- DE-A1- 10 131 216
- JP-A- 2 304 367
- US-A1- 2004 232 233

## Description

The present invention relates to a mechanism and a method for locking a removable data carrier in a support structure of an electronic device provided in a vehicle. Locking mechanisms according to the preamble of claim 1 are known from US 2004/0232233 A1 and JP 02 304 367 A.

In modern car radio systems, car entertainment systems, navigation systems, and hands-free speaking systems for vehicles there are slots for receiving memory cards or the like for providing for example music or videos for a car radio system or a car entertainment system, electronic maps for a car navigation system, subscriber identification information on a SIM (subscriber identity module) card for a hands-free speaking systems or a CA module (condition access module) for a car entertainment system for receiving protected audio or video sources. These data carriers, for example memory cards, SIM cards, or CA modules, are usually inserted via a slot in the front plate of an electronic device provided in the vehicle, for example a car radio system, a car navigation system, a car entertainment system or a hands-free speaking system. These data carriers are very valuable due to the cost of the data carrier itself, be it a memory card with several GB capacity, be it due to the content stored on the data carrier, especially in case of a SIM card or a CA module.

As these data carriers are easily accessible and removable from the electronic device as they should be easily exchangeable by the user, these data carriers are also easily removable by an unauthorized person breaking into the vehicle and stealing the data carrier.

Therefore, there is a need to provide a mechanism and a method providing a theft protection of a data carrier against an unauthorized person whereas an authorized person should still be able to easily insert and remove the data carrier.

According to the present invention, this need is met by a locking mechanism as defined in claim 1, and a method for locking a removable data carrier as defined in claim 14. The dependent claims define preferred and advantageous embodiments of the invention.

According to an aspect of the invention, a locking mechanism for locking a removable data carrier in a support structure of an electronic device is provided. The electronic device is provided in a vehicle. The locking mechanism comprises a movable locking element moveable between a locked position and an unlocked position. In its locked position, the locking element prevents the removal of the data carrier from the support structure. In the unlocked position of the locking element, the removable data carrier is freely insertable and removable into and from the support structure. Furthermore, the locking mechanism comprises indicating means indicating that a locking of the removable data carrier is required, and a locking element control unit controlling the position of the locking element. When the indicating means indicate that a locking of the removable data carrier is required, the locking element control unit moves the locking element to its locked position.

The indicating means can comprise an ignition status detecting means detecting whether the ignition of the vehicle is switched on or off and indicating that a locking of the removable data carrier is required, when the ignition is switched off.

The indicating means can furthermore comprise a user operable switch, wherein an operation of the switch indicates that a locking of the removable data carrier is required.

By the fact that the locking element prevents the removal of the data carrier from the support structure, the data carrier is protected against removal by an unauthorized person. As the locking element can be moved to the locked position upon detecting that the ignition of the vehicle is switched off, the data carrier is protected against a removal by an unauthorized person without further interaction of the user of the vehicle in which the electronic device is installed in which the data carrier is inserted. As no additional interaction is needed by the user of the vehicle for locking the removable data carrier, a very high degree of protection against the removal of the data carrier by an unauthorized person is guaranteed.

As the locking element can be moved to the locked position upon operation of a switch, which may be located on a removable front plate of the electronic device, the data carrier is protected against a removal by an unauthorized person in that the switch is operated to lock the removable data carrier and the removable front plate is removed by the authorized user from the electronic device upon leaving the vehicle. This provides e.g. a theft protection in case no ignition detecting means are available connecting the electronic device with the vehicle, or in case the vehicle is left in a served parking lot or a garage, where the vehicle keys are left together with the car.

According to an embodiment of the invention, the removable data carrier is insertable and removable into and from the support structure via an opening facing the passenger compartment. The locking element may be positioned, in its locked position, such that the opening through which the data carrier is removable from the support structure is at least partly blocked.

Such a locking mechanism is easy to design, is working reliable in operation, and provides a reliable protection against an unauthorized removal of the data carrier.

According to another embodiment of the invention, the locking mechanism may further comprise a timer which delays the movement of the locking element to the locked position for a predetermined period of time after detecting that the ignition is switched off. This enables the user of the vehicle comprising the electronic device containing the removable data carrier in a support structure to remove the removable data carrier after having e.g. switched off the ignition for a predetermined period of time. Therefore, when leaving the car, the user does not need to let the engine run until he or she has removed the removable data carrier. This provides a saving of energy and increases the comfort for the user.

According to another embodiment of the invention, the locking mechanism moves to the unlocked position upon detecting that the ignition is switched on.

This provides an unlocking of the removable data carrier without special interaction between the user and the electronic device and eases therefore the handling of the locking mechanism.

According to another aspect of the invention, a method for locking a removable data carrier in a support structure of an electronic device provided in a vehicle is provided. The method comprises the step of indicating that a locking of the removable data carrier is required, e.g. detecting that the ignition of the vehicle is switched off or a user operable switch is operated. Upon indication that a locking of the removable data carrier is required, a moveable locking element, which is moveable between a locked position and an unlocked position, is moved to its locked position. In its locked position, the locking element prevents the removal of the data carrier from the support structure.

According to an embodiment of the invention, the method may comprise the step that the moving of the locking element to its locked position is delayed for a predetermined period of time. Furthermore, the method may comprise, upon detecting that the ignition of the vehicle is switched on, an unlocking of the removable data carrier in the electronic device by moving the locking element to its unlocked position.

The invention will now be described in more detail with reference to the accompanying drawings, in which:
Figure 1 is a schematic diagram showing the components of a locking mechanism according to the invention.
Figure 2 is a schematic view of an electronic device containing a support structure for a removable data carrier.
Figure 3 shows an embodiment of a locking mechanism wherein the locking element comprises a bolt.
Figure 4 shows an embodiment of a locking mechanism wherein the locking element comprises flap.

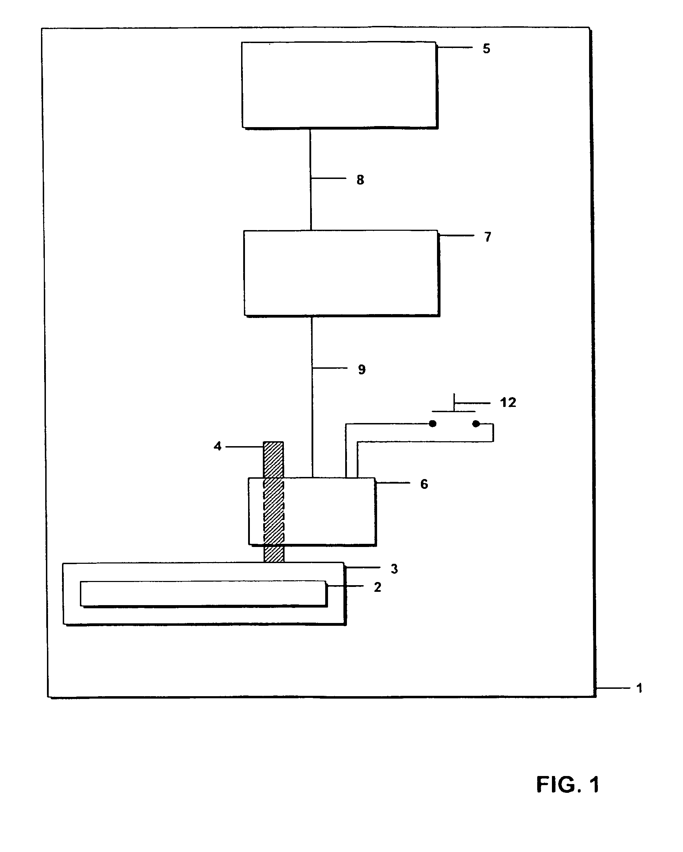

Figure 1 shows a schematic diagram of a locking mechanism 1 for locking a removable data carrier 2 in a support structure 3 of an electronic device provided in a vehicle. The locking mechanism 1 comprises a movable locking element 4, which is moveable between a locked position and an unlocked position, wherein the locking element prevents, in its locked position, the removal of the data carrier 2 from the support structure 3. Furthermore, the locking mechanism 1 comprises ignition status detecting means 5 for detecting whether the ignition of the vehicle is switched on or off, a user operable switch 12, and a locking element control unit 6 controlling the position of the locking element, wherein the locking element control unit 6 moves the locking element 4 to its locked position when the ignition status detecting means 5 detect that the ignition is switched off. Further, the locking mechanism according to this embodiment comprises a timer 7 delaying the movement of the locking element for a predetermined period of time after detecting that the ignition is switched off. As can be seen in Figure 1, the ignition status detecting means 5 is connected via the timer 7 with the locking element control unit 6, which controls the locking element 4.

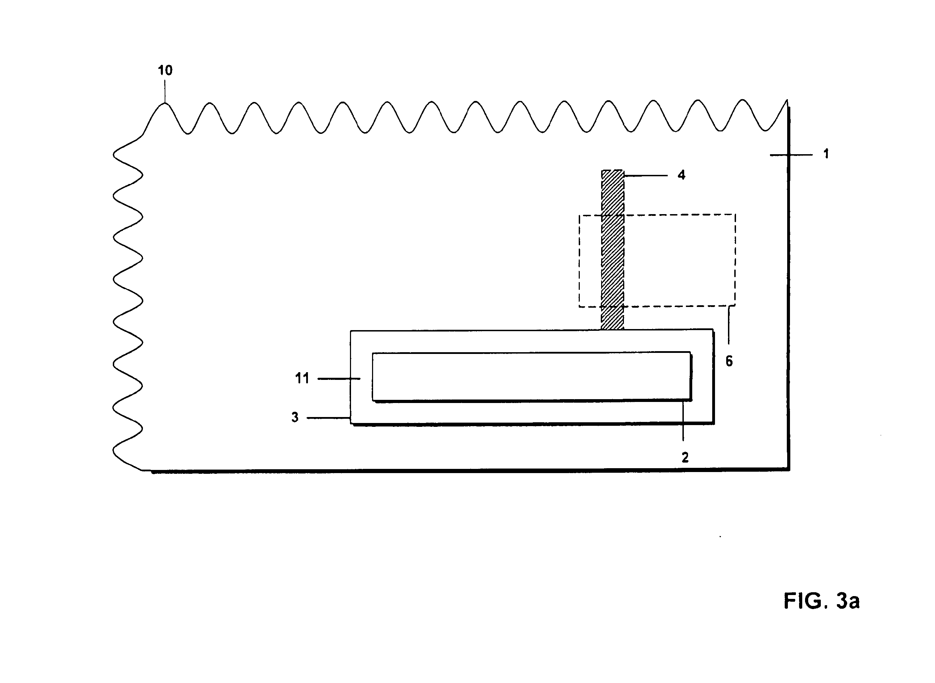

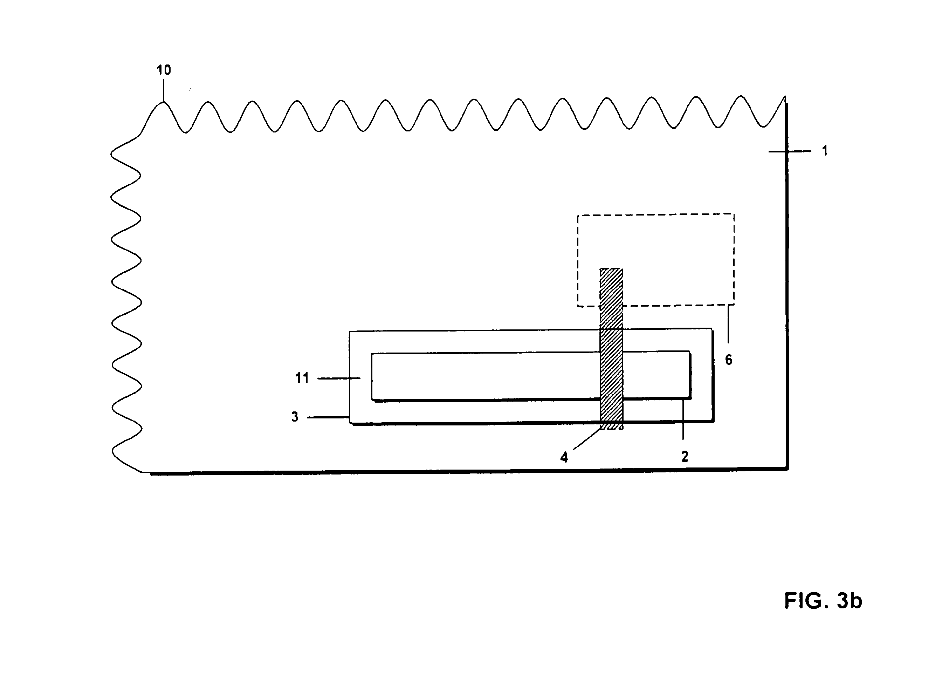

Upon detection that the ignition is switched off by the ignition status detecting means 5 a signal is sent to the timer 7 via connection 8. Timer 7 delays the signal received from the ignition status detecting means for a predetermined period of time, for example 30 seconds, and then sends the signal indicating that the ignition is switched off via connection 9 to the locking element control unit 6. After receiving the signal that the ignition is switched off, the locking element control unit 6 moves the locking element 4 from its unlocked position which is indicated in Figure 1 to its locked position as will be described later in connection with Figure 3. In its locked position, the locking element prevents the removal of the data carrier 2 from the support structure 3.

Alternatively upon operating the user operable switch 12 the locking element control unit 6 moves the locking element 4 from its unlocked position which is indicated in Figure 1 to its locked position as will be described later in connection with Figure 3.

Upon detection that the ignition is switched on, the ignition status detecting means 5 sends a signal indicating that the ignition is switched on via connection 8 to the timer 7. In this case, the timer 7 directly, without delaying the signal for a predetermined period of time, sends a signal indicating that the ignition is switched on to the locking element control unit 6 via the connection 9. The locking element control unit 6 then moves the locking element 4 from its locked position to its unlocked position which enables the removal of the data carrier 2 from the support structure 3. Additionally or alternatively an operating of the switch 12 may be required before the locking element 4 is moved from its locked position to its unlocked position.

The locking mechanism of Figure 1 enables a reliable protection against a removal of the data carrier 2 from the support structure 3 by an unauthorized person when the ignition of the vehicle is switched off in which the electronic device containing the data carrier 2 in the support structure 3 is provided. The timer 7 enables the authorized user of the car and the electronic device to remove the data carrier even if the ignition is switched off for a predetermined period of time, thus avoiding that the user has to let the engine run until the removable data carrier is removed if he wants to leave the vehicle and take the removable data carrier with him. On the other hand, the removable data carrier is always removable having switched on the ignition of the vehicle and/or operated the switch 12.

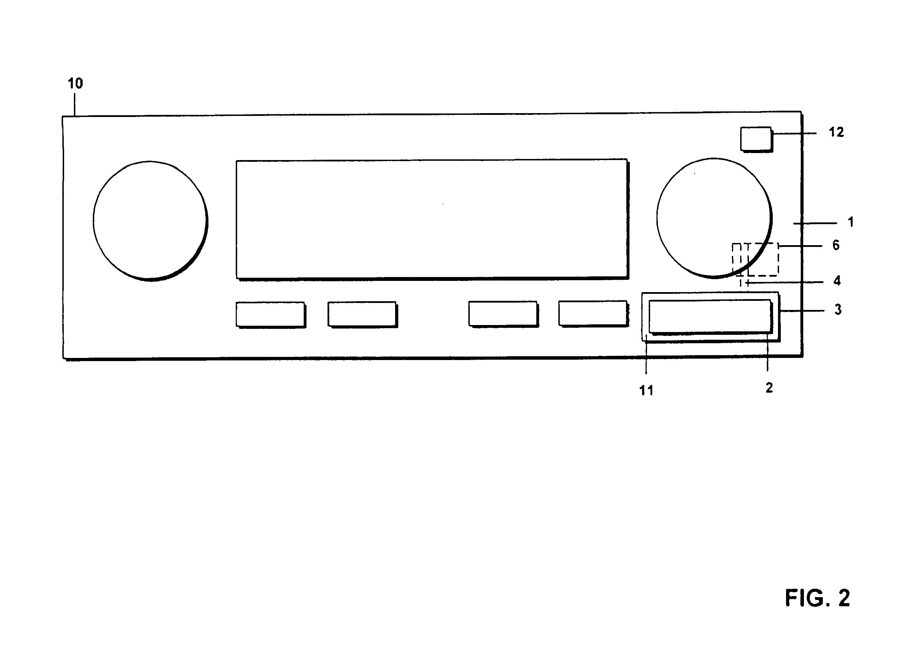

Figure 2 shows an electronic device 10 including a locking mechanism 1. The electronic device may be a vehicle radio system, a vehicle navigation system, a vehicle entertainment system, or a hands-free speaking system in the vehicle. As shown in Figure 2, the locking mechanism 1 comprises a moveable locking element 4 moveable between a locked position and an unlocked position, wherein the locking element, in its locked position, prevents the removal of the data carrier 2 from the support structure 3, ignition status detecting means (not shown), a switch 12 which is located on a front plate of the electronic device which may be removable by a quick fastening system by the user, and a locking element control unit 6 controlling the position of the locking element. The locking element, in its locked position, is positioned such that an opening 11, through which the data carrier is removable from the support structure, is at least partly blocked. In Figure 2 the locking element 4 comprises a bolt which, in its locked position, protrudes from an edge of the opening 11 in a direction inwardly of the opening 11 and substantially in parallel with a plane defined by the edge of the opening. This will be described in more detail in connection with Figure 3. The opening 11 shown in Figure 2 has a slot-like shape, but is not restricted to a slot-like shape and may have any shape required for inserting and removing the removable data carrier. The removable data carrier may be a memory card providing for example music or videos or map information or a vehicle radio system, a vehicle entertainment system or a vehicle navigation system, or may be a SIM (subscriber identity module) card for a hands-free speaking system in a vehicle or a hands-free speaking system integrated in a vehicle radio system, or a CA (condition access) module for a vehicle radio system or a vehicle entertainment system for providing access to radio or TV data sources.

Figure 3 shows an embodiment of the locking mechanism 1. In this embodiment the locking element 4 of the locking mechanism 1 comprises a bolt 4 which is moveable from its unlocked position as shown in Figure 3a to a locked position shown in Figure 3b and vice versa. The locking element control unit 6 moves, upon reception of a signal from the ignition status detecting means (not shown) indicating that the ignition of the vehicle is switched off, the locking element 4 from its unlocked position as shown in Figure 3a to its locked position as shown in Figure 3b. The bolt 4 extends substantially in parallel with a plane defined by the edge of the opening 11. In its locked position the bolt extends from a first edge of the opening 11 to a second edge opposing the first edge of the opening 11. In its extended position the bolt 4 prevents the removal of the data carrier 2 from the support structure 3 through the opening 11.

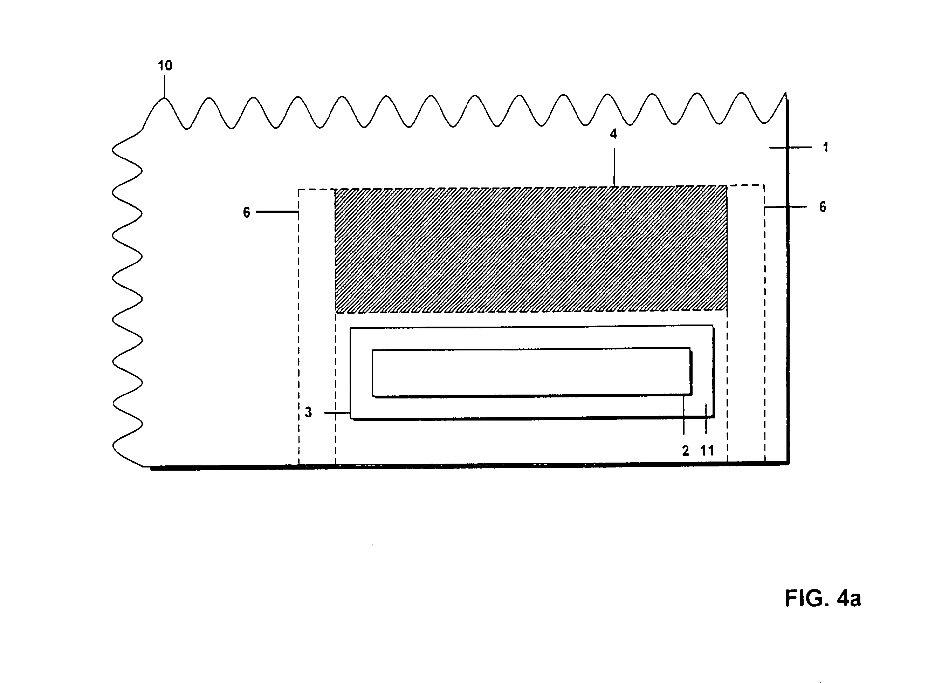

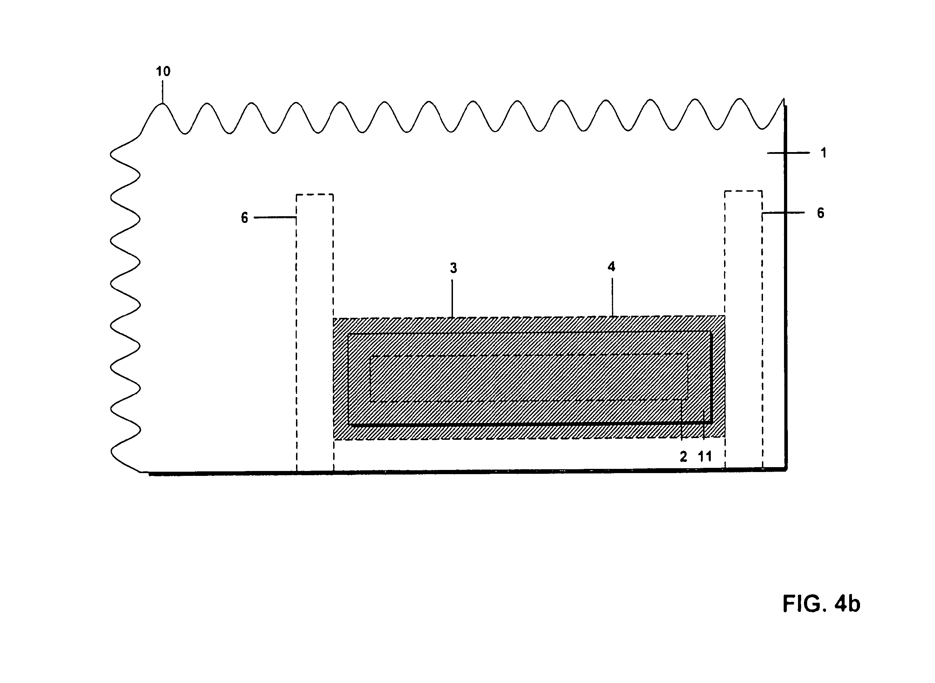

Figure 4 shows another embodiment of the invention wherein the locking element 4 comprises a flap, which, in its locked position, covers at least partly the opening 11. The locking element control unit 6 controls the position of the locking element 4. In its unlocked position, as shown in Figure 4a, the flap 4 does not cover the opening 11 and therefore the data carrier 2 can be removed from or inserted into the support structure 3 of the electronic device 10. In its locked position the locking element 4 blocks at least partly or, as shown in Figure 4b, completely the opening 11. Therefore, in this locked position the flap 4 prevents the removal of the data carrier 2 from the support structure 3. Furthermore, the flap, in its locked position, hides the opening 11 such that the opening 11 and the data carrier 2 are not visible, when the ignition is switched off. The locking element control unit 6 controls the position of the flap 4 upon signals received from the ignition status detecting means or the switch 12 as described above.

## Claims

1. A locking mechanism (1) for locking a removable data carrier (2) in a support structure (3) of an electronic device (10) provided in a vehicle, comprising
a movable locking element (4) movable between a locked position and an unlocked position, the locking element (4), in its locked position, prevents the removal of the data carrier (2) from the support structure (3),
**characterized by**
indicating means (5,12) indicating that a locking of the removable data carrier (2) is required, and
a locking element control unit (6) controlling the position of the locking element (4),
wherein
when the indicating means (5,12) indicate that a locking of the removable data carrier (2) is required, the locking element control unit (6) moves the locking element (4) to its locked position.

2. A locking mechanism (1) according to claim 1,
wherein the indicating means (5, 12) comprise an ignition status detecting means (5) detecting whether ignition of the vehicle is switched on or off and indicating that a locking of the removable data carrier is required, when the ignition is switched off.

3. A locking mechanism (1) according to claim 1 or claim 2,
wherein the indicating means (5, 12) comprise a switch (12), wherein an operation of the switch (12) indicates that a locking of the removable data carrier is required.

4. A locking mechanism (1) according to any one of claims 1-3,
wherein the locking element (4) is positioned, in its locked position, such that an opening (11) through which the data carrier (2) is removable from the support structure (3) is at least partly blocked.

5. A locking mechanism (1) according to claim 4,
wherein the locking element (4) comprises a flap (4) which, in its locked position, covers at least partly the opening (11).

6. A locking mechanism (1) according to claim 4 or 5,
wherein the locking element (4) comprises a flap (4) which, in its locked position, completely covers the opening (11).

7. A locking mechanism (1) according to any one of claims 4-6,
wherein the locking element (4) comprises a bolt (4) which, in its locked position, protrudes from an edge of the opening (11) in a direction inwardly of the opening (11) and substantially in parallel with a plane defined by the edge of the opening (11).

8. A locking mechanism (1) according to any one of claims 4-7,
wherein the opening (11) has a slot-like shape.

9. A locking mechanism (1) according to any one of claims 1-8,
wherein the data carrier (2) comprises a memory card, a micro drive card, a SIM (subscriber identity module) card, or a CA (condition access) module.

10. A locking mechanism (1) according to any one of claims 1-9,
wherein the electronic device (10) comprises a vehicle radio system, a vehicle navigation system, a vehicle entertainment system, or a hands-free speaking system in a vehicle.

11. A locking mechanism (1) according to any one of claims 1-10,
further comprising a timer (7), the timer (7) delaying the movement of the locking element (4) to its locked position for a predetermined period of time after detecting that the ignition of the vehicle is switched off.

12. A locking mechanism (1) according to any one of claims 1-11,
wherein the locking element (4) moves to the unlocked position upon detecting that the ignition of the vehicle is switched on.

13. A locking mechanism (1) according to any one of claims 1-12,
wherein the locking element (4) moves to the unlocked position upon detecting that a switch (12) is operated.

14. A method for locking a removable data carrier (2) in a support structure (3) of an electronic device (10) provided in a vehicle, comprising the step of
indicating that a locking of the removable data carrier is required,
wherein
upon indication that a locking of the removable data carrier is required a movable locking element (4) movable between a locked position and an unlocked position, the locking element (4), in its locked position, preventing the removal of the data carrier (2) from the support structure (3), is moved to its locked position.

15. A method according to claim 14,
wherein a detection of a switching off of the ignition of the vehicle indicates that a locking of the removable data carrier is required.

16. A method according to claim 14 or claim 15,
wherein an operation of a switch (12) indicates that a locking of the removable data carrier is required.

17. A method according to any one of claims 14-16,
wherein the moving of the locking element (4) to its locked position is delayed for a predetermined period of time.

18. A method according to any one of claims 14-17,
further comprising the step of unlocking of the removable data carrier (2) in the electronic device (10) by moving the locking element (4) to its unlocked position upon detecting that the ignition of the vehicle is switched on.

19. A method according to any one of claims 14-18,
further comprising the step of unlocking of the removable data carrier (2) in the electronic device (10) by moving the locking element (4) to its unlocked position upon operation of the switch (12).

## Patentansprüche

1. Verriegelungsmechanismus (1) zum Verriegeln eines entfernbaren Datenträgers (2) in einer Haltestruktur (3) einer elektronischen Vorrichtung (10), welche in einem Fahrzeug vorgesehen ist, umfassend:
ein bewegliches Verriegelungselement (4), welches zwischen einer verriegelten Position und einer entriegelten Position beweglich ist, wobei das Verriegelungselement (4) in seiner verriegelten Position das Entfernen des Datenträgers (2) aus der Haltestruktur (3) verhindert,
**gekennzeichnet durch**
Anzeigemittel (5, 12), welche anzeigen, dass eine Verriegelung des entfernbaren Datenträgers (2) gefordert ist, und
eine Verriegelungselementsteuereinheit (6), welche die Position des Verriegelungselements (4) steuert,
wobei
die Verriegelungselementsteuereinheit (6) das Verriegelungselement (4) in seine verriegelte Position bewegt, wenn die Anzeigemittel (5, 12) anzeigen, dass eine Verriegelung des entfernbaren Datenträgers (2) gefordert ist.

2. Verriegelungselement (1) nach Anspruch 1,
wobei die Anzeigemittel (5, 12) ein Zündungsstatuserfassungsmittel (5) umfassen, welches erfasst, ob eine Zündung des Fahrzeugs ein- oder ausgeschaltet ist und anzeigt, dass eine Verriegelung des entfernbaren Datenträgers gefordert ist, wenn die Zündung ausgeschaltet ist.

3. Verriegelungsmechanismus (1) nach Anspruch 1 oder Anspruch 2,
wobei die Anzeigemittel (5, 12) einen Schalter (12) umfassen, wobei ein Betätigen des Schalters (12) anzeigt, dass eine Verriegelung des entfernbaren Datenträgers gefordert ist.

4. Verriegelungsmechanismus (1) nach einem der Ansprüche 1-3,
wobei das Verriegelungselement (4) in seiner verriegelten Position derart angeordnet ist, dass eine Öffnung (11), durch welche der Datenträger (2) aus der Haltestruktur (3) entfernbar ist, zumindest teilweise blockiert ist.

5. Verriegelungsmechanismus (1) nach Anspruch 4,
wobei das Verriegelungselement (4) eine Klappe (4) umfasst, welche in ihrer verriegelten Position die Öffnung (11) zumindest teilweise bedeckt.

6. Verriegelungsmechanismus (1) nach Anspruch 4 oder 5,
wobei das Verriegelungselement (4) eine Klappe (4) umfasst, welche in ihrer verriegelten Position die Öffnung (11) vollständig bedeckt.

7. Verriegelungsmechanismus (1) nach einem der Ansprüche 4-6,
wobei das Verriegelungselement (4) einen Bolzen (4) umfasst, welcher in seiner verriegelten Position von einem Rand der Öffnung (11) in einer Richtung nach innen von der Öffnung (11) und im Wesentlichen parallel zu einer Ebene, welche von dem Rand der Öffnung (11) definiert wird, hervorragt.

8. Verriegelungsmechanismus (1) nach einem der Ansprüche 4-7,
wobei die Öffnung (11) eine schlitzähnliche Form aufweist.

9. Verriegelungsmechanismus (1) nach einem der Ansprüche 1-8,
wobei der Datenträger (2) eine Speicherkarte, eine Mikrofestplattenkarte, eine SIM-Karte (subscriber identity module, Teilnehmeridentifikationsmodul) oder ein CA-Modul (condition access) umfasst.

10. Verriegelungsmechanismus (1) nach einem der Ansprüche 1-9,
wobei die elektronische Vorrichtung (10) ein Fahrzeugradiosystem, ein Fahrzeugnavigationssystem, ein Fahrzeugunterhaltungssystem oder ein Freisprechsystem in einem Fahrzeug umfasst.

11. Verriegelungsmechanismus (1) nach einem der Ansprüche 1-10,
ferner umfassend einen Zeitgeber (7), wobei der Zeitgeber (7) die Bewegung des Verriegelungselements (4) in seine verriegelte Position nachdem erfasst wurde, dass die Zündung des Fahrzeugs ausgeschaltet ist, für eine vorbestimmte Zeitdauer verzögert.

12. Verriegelungsmechanismus (1) nach einem der Ansprüche 1-11,
wobei sich das Verriegelungselement (4) aufgrund eines Erfassens, dass die Zündung des Fahrzeugs eingeschaltet ist, in die entriegelte Position bewegt.

13. Verriegelungsmechanismus (1) nach einem der Ansprüche 1-12,
wobei sich das Verriegelungselement (4) aufgrund eines Erfassens, dass ein Schalter (12) betätigt wird, in die entriegelte Position bewegt.

14. Verfahren zum Verriegeln eines entfernbaren Datenträgers (2) in einer Haltestruktur (3) einer elektronischen Vorrichtung (10), welche in einem Fahrzeug vorgesehen ist, umfassend die Schritte:
Anzeigen, dass eine Verriegelung des entfernbaren Datenträgers gefordert ist,
wobei
aufgrund einer Anzeige, dass eine Verriegelung des entfernbaren Datenträgers gefordert ist, ein bewegliches Verriegelungselement (4), welches zwischen einer verriegelten Position und einer entriegelten Position beweglich ist, in seine verriegelte Position bewegt wird, wobei das Verriegelungselement (4) in seiner verriegelten Position das Entfernen des Datenträgers (2) aus der Haltestruktur (3) verhindert.

15. Verfahren nach Anspruch 14,
wobei ein Erfassen eines Ausschaltens der Zündung des Fahrzeugs anzeigt, dass eine Verriegelung des entfernbaren Datenträgers gefordert ist.

16. Verfahren nach Anspruch 14 oder 15,
wobei ein Betätigen eines Schalters (12) anzeigt, dass eine Verriegelung des entfernbaren Datenträgers gefordert ist.

17. Verfahren nach einem der Ansprüche 14-16,
wobei das Bewegen des Verriegelungselements (4) in seine verriegelte Position für eine vorbestimmte Zeitdauer verzögert wird.

18. Verfahren nach einem der Ansprüche 14-17,
ferner umfassend den Schritt eines Entriegelns des entfernbaren Datenträgers (2) in der elektronischen Vorrichtung (10) durch Bewegen des Verriegelungselements (4) in seine entriegelte Position aufgrund eines Erfassens, dass die Zündung des Fahrzeugs eingeschaltet ist.

19. Verfahren nach einem der Ansprüche 14-18,
ferner umfassend den Schritt eines Entriegelns des entfernbaren Datenträgers (2) in der elektronischen Vorrichtung (10) durch Bewegen des Verriegelungselements (4) in seine entriegelte Position aufgrund einer Betätigung des Schalters (12).

## Revendications

1. Mécanisme de verrouillage (1) pour verrouiller un support de données amovible (2) dans une structure de support (3) d'un dispositif électronique (10) prévu dans un véhicule, comprenant :
un élément de verrouillage mobile (4) mobile entre une position verrouillée et une position déverrouillée, l'élément de verrouillage (4), dans sa position verrouillée, empêche le retrait du support de données (2) de la structure de données (3), **caractérisé par** :
des moyens d'indication (5, 12) indiquant qu'un verrouillage du support de données amovible (2) est requis, et
une unité de commande d'élément de verrouillage (6) commandant la position de l'élément de verrouillage (4),
dans lequel :
lorsque les moyens d'indication (5, 12) indiquent qu'un verrouillage du support de données amovible (2) est requis, l'unité de commande d'élément de verrouillage (6) déplace l'élément de verrouillage (4) dans sa position verrouillée.

2. Mécanisme de verrouillage (1) selon la revendication 1, dans lequel les moyens d'indication (5, 12) comprennent des moyens de détection de statut d'allumage (5) détectant si l'allumage du véhicule est mis en marche ou arrêté et indiquant qu'un verrouillage du support de données amovible est requis, lorsque l'allumage est arrêté.

3. Mécanisme de verrouillage (1) selon la revendication 1 ou la revendication 2, dans lequel les moyens d'indication (5, 12) comprennent un commutateur (12), dans lequel une opération du commutateur (12) indique qu'un verrouillage du support de données amovible est requis.

4. Mécanisme de verrouillage (1) selon l'une quelconque des revendications 1 à 3, dans lequel l'élément de verrouillage (4) est positionné, dans sa position verrouillée, de sorte qu'une ouverture (11) à travers laquelle le support de données (2) est amovible de la structure de support (3), est au moins partiellement bloqué.

5. Mécanisme de verrouillage (1) selon la revendication 4, dans lequel l'élément de verrouillage (4) comprend un volet (4) qui, dans sa position verrouillée, recouvre au moins partiellement l'ouverture (11).

6. Mécanisme de verrouillage (1) selon la revendication 4 ou 5, dans lequel l'élément de verrouillage (4) comprend un volet (4) qui, dans sa position verrouillée, recouvre complètement l'ouverture (11).

7. Mécanisme de verrouillage (1) selon l'une quelconque des revendications 4 à 6, dans lequel l'élément de verrouillage (4) comprend un boulon (4) qui, dans sa position verrouillée, fait saillie d'un bord de l'ouverture (11) dans une direction allant vers l'intérieur de l'ouverture (11) et sensiblement parallèle à un plan défini par le bord de l'ouverture (11).

8. Mécanisme de verrouillage (1) selon l'une quelconque des revendications 4 à 7, dans lequel l'ouverture (11) a une forme de fente.

9. Mécanisme de verrouillage (1) selon l'une quelconque des revendications 1 à 8, dans lequel le support de données (2) comprend une carte mémoire, une carte de microentraînement, une carte SIM (carte d'identification de l'abonné), ou un module CA (accès soumis à condition).

10. Mécanisme de verrouillage (1) selon l'une quelconque des revendications 1 à 9, dans lequel le dispositif électronique (10) comprend un système de radio de véhicule, un système de navigation de véhicule, un système de divertissement de véhicule ou un système de téléphonie à main libre dans un véhicule.

11. Mécanisme de verrouillage (1) selon l'une quelconque des revendications 1 à 10, comprenant en outre une minuterie (7), la minuterie (7) retardant le mouvement de l'élément de verrouillage (4) dans sa position verrouillée pendant une période prédéterminée de temps après avoir détecté que l'allumage du véhicule est arrêté.

12. Mécanisme de verrouillage (1) selon l'une quelconque des revendications 1 à 11, dans lequel l'élément de verrouillage (4) se déplace dans la position déverrouillée après avoir détecté que l'allumage du véhicule est mis en marche.

13. Mécanisme de verrouillage (1) selon l'une quelconque des revendications 1 à 12, dans lequel l'élément de verrouillage (4) se déplace dans la position déverrouillée après avoir détecté qu'un commutateur (12) est actionné.

14. Procédé pour verrouiller un support de données amovible (2) dans une structure de support (3) d'un dispositif électronique (10) prévu dans un véhicule, comprenant l'étape consistant à :
indiquer qu'un verrouillage du support de données amovible est requis,
dans lequel :
après l'indication qu'un verrouillage du support de données amovible est requis, un élément de verrouillage mobile (4), mobile entre une position verrouillée et une position déverrouillée, l'élément de verrouillage (4), dans sa position verrouillée, empêchant le retrait du support de données (2) de la structure de support (3), est déplacé dans sa position verrouillée.

15. Procédé selon la revendication 14, dans lequel une détection d'un arrêt de l'allumage du véhicule indique qu'un verrouillage du support de données amovible est requis.

16. Procédé selon la revendication 14 ou la revendication 15, dans lequel une opération d'un commutateur (12) indique qu'un verrouillage du support de données amovible est requis.

17. Procédé selon l'une quelconque des revendications 14 à 16, dans lequel le déplacement de l'élément de verrouillage (4) dans sa position verrouillée est retardé pendant une période prédéterminée de temps.

18. Procédé selon l'une quelconque des revendications 14 à 17, comprenant en outre l'étape consistant à déverrouiller le support de données amovible (2) dans le dispositif électronique (10) en déplaçant l'élément de verrouillage (4) dans sa position déverrouillée après avoir détecté que l'allumage du véhicule est mis en marche.

19. Procédé selon l'une quelconque des revendications 14 à 18, comprenant en outre l'étape consistant à déverrouiller le support de données amovible (2) dans le dispositif électronique (10) en déplaçant l'élément de verrouillage (4) dans sa position déverrouillée suite à l'opération du commutateur (12).
